Europäisches Patentamt

European Patent Office

Office européen des brevets

(11) Publication number: **0 307 243 B1**

## EUROPEAN PATENT SPECIFICATION

(45) Date of publication of patent specification: **02.12.92**

(51) Int. Cl.⁵: **H04B 10/00**, G02B 6/28, H04Q 3/52

(21) Application number: **88308380.0**

(22) Date of filing: **09.09.88**

(54) **Optical distributor.**

(30) Priority: **11.09.87 GB 8721472**

(43) Date of publication of application:
**15.03.89 Bulletin 89/11**

(45) Publication of the grant of the patent:
**02.12.92 Bulletin 92/49**

(84) Designated Contracting States:
**AT BE CH DE ES FR GB GR IT LI LU NL SE**

(56) References cited:
**DE-A- 2 454 996**
**FR-A- 2 341 873**

**PATENT ABSTRACTS OF JAPAN, vol. 7, no. 73 (P-186)[1218], 25th March 1983; & JP-A-58 2818**

**JOURNAL OF LIGHTWAVE TECHNOLOGY, vol. LT-3, no. 2, April 1985, pages 230-235, IEEE, New York, US; A. HIMENO et al.: "4x4 optical-gate matrix switch"**

(73) Proprietor: **BRITISH TELECOMMUNICATIONS public limited company**
**81 Newgate Street**
**London EC1A 7AJ(GB)**

(72) Inventor: **Healey, Peter**
**31 Norbury Road**
**Ipswich Suffolk IP4 4RO(GB)**

(74) Representative: **Pratt, David Martin et al**
**Intellectual Property Unit British Telecom**
**151 Gower Street**
**London WC1E 6BA(GB)**

EP 0 307 243 B1

# Description

The present invention relates to devices for distributing optical signals. Such devices are needed in fields such as optical communications and signal processing. They may be required to split only one input signal amongst $2^n$ output devices or alternatively may interconnect $2^n$ input devices with $2^n$ output devices, n being an integer greater than 1. Known devices used for this purpose have typically been formed from arrays of 4-port optical couplers interconnected by links of optical fibres in a star network configuration. These devices require large numbers of separate components, as many as 12 different couplers being required in the case of an 8 port star network. The physical complexity of such systems makes them expensive to manufacture and difficult to instal in-line in optical systems. Moreover, insertion losses associated with each individual coupler have a cumulative effect which significantly degraded the performance of the network as a whole.

FR-A-2,341,873 and DE-A-2454,996 disclose a method of forming a 1 to $2^n$ optical distributor which uses n successive stages of optical beam splitters, each beam splitter stage having one or more individual transflective beam splitters to split an optical path into two further paths, and mirrors to realign the optical paths as necessary.

Such devices are capable of splitting an optical signal equally among many outputs and of distributing intact all the components of a signal which is multidimensional in the optical regime, having spacial, colour, time and polarisation components but it uses an arrangement which requires $2^{(k-1)}$ separate beam splitters components for the $k^{th}$ stage and associated mirrors which means the number of beam splitters elements increases rapidly with increasing n.

According to a first aspect the present invention an optical distributor has at least one optical input, $2^n$ optical outputs, where n is an integer greater than 1, one or more plane mirror surfaces and at least one transflective means, the plane mirror surface or surfaces and the transflective means being arranged to provide one optical path between the input and each of the outputs, each path making n transitions only at the transflective means, at least two of the transflective means being portions of a single transflective surface.

A device in accordance with the present invention is more compact, and may be formed using a smaller and sometimes the minimum number of different components than with previously known arrangements and can therefore be simpler and cheap to manufacture and instal. The two transflective means may be part of the same or different beam splitter stages.

The present invention is applicable to distributors having a single input to provide a 1 to $2^n$ distributor, which is functionally equivalent to known such distributors as previously described, as well as to distributors where the above optical input is one of $2^n$ optical inputs, for example star couplers.

The transflective means may, for example, be formed by a transflective coating on a glass substrate or by a cube beam splitter. They have the property that light incident upon the transflective means is divided into two beams of equal power, a reflected beam and a transmitted beam. The transflective means are substantially insensitive to the presence of different polarisation components in the incident light.

The or each plane mirror surface may be formed by a conventional metal or multiplayer dielectric coating on a glass substrate, by a totally reflecting prism or by any other surface arranged to reflect substantially all of the power of any incident beam.

A distributor according to the present invention having one input and $2^n$ outputs can be arranged to n beam splitter stages each of which includes a single separate transflective surface and a first plane mirror surface arranged such that the or each beam incident on each beam splitter stage is split into a reflected beam and a transmitted beam, one of the beams passing directly to any subsequent beam splitter stage, the other of the two beams being reflected at the first plane mirror surface before passing to any subsequent beam splitter stage.

Preferably the transflective surfaces are arranged to lie at substantially 45° to the incident beams and the plane mirror surface is parallel to the transflective surfaces.

This arrangement provides a 1 to $2^n$ optical distributor using one mirror and only n beam splitter elements.

Preferably the splitter stages are arranged in order of beam splitter effective length, with the shortest stage closest to the optical input. In such a device the effective length of the beam splitter is determined by the physical length of the transflective surface.

According to a second aspect of the present invention there is provided an optical distributor having $2^n$ optical inputs according to the first aspect of the invention, each of the transflective means being in the optical paths originating from at least two distinct inputs.

A first arrangement of such an optical distributer may comprise n beam splitter stages in which each kth beam splitter stage has $2^{n-k}$ spatially separate transflective surfaces arranged between a first plane mirror surface and a second opposing plane mirror surface parallel to the first plane mirror surface.

In this case each of the $2^{(n-k)}$ transflective surfaces of the kth beam splitter stage form $2^k$ of transflective means of that beam splitter stage. The stages are not necessary in order as will be discussed later.

In another arrangements the transflective means from different stages can be formed from a single transflective element.

In such arrangements the transflective surfaces of the beam splitter stages each act as beam splitters for beam originating from two or more inputs.

A further redundancy in transflective means can be obtained in a reflective star coupler according to the present invention as each transflective means can form the transflective means necessary for the optical path of at least four inputs.

Alternatively the transflective means of all the necessary beam splitter stages can comprise portions of a single transflective surface in which case the plane mirror surfaces include separate mirror surfaces of different lengths arranged on either side of the single transflective surface.

Preferably the beam splitters extend in the direction at right angles to a first plane containing the optical input and outputs and one or more further independent sets of optical inputs and outputs are provided in a plane or planes parallel to the first plane.

A distributor in accordance with the present invention has the properties of a star-network in the case with $2^n$ inputs and $2^n$ outputs or a tree-network in the simpler case of a single input going to $2^n$ outputs. It is readily constructed because all the beam splitters may be identical in form, differing only in scale for the different stages. This enables the use of a minimum number of components to achieve the desired power distribution. Since there is only one path between each input and output port, multipath propagation and the resultant degradation in signal handling cannot occur. The ratio of the device endface size to its length is $2^n/(2^n-1)$ and tends to unity for large n. The power distributor is therefore well proportioned and compact, facilitating its insertion in line in optical systems.

A device in accordance with the present invention is now described in detail with reference to the accompanying drawings, in which:

Figure 1 is a side elevation of a first embodiment of the present invention having a single input;

Figure 2 is a side elevation of an alternative embodiment of the present invention having a single input;

Figure 3 is a side elevation of a further alternative embodiment of the present invention in the form of a star coupler;

Figures 4 and 5 are side elevations of a star coupler functionally equivalent of Figure 3 with the beams splitting stages in different orders;

Figure 6 is a diagram illustrating growth-rules for the beam splitter networks shown in Figures 1, 2 and 3;

Figure 7a to 7c are diagrams illustrating the multiplexing functions of devices in accordance with the present invention;

Figures 8a and 8b are side elevations of reflective networks in accordance with the present invention;

Figure 9 is a side elevation of a four by four coupler according to the present invention in which transflective elements of different stages are formed on a common element;

Figure 10 is a diagram illustrating a 4 input common transflector network in accordance with the present invention;

Figure 11 is a diagram illustrating an 8 input common transflector network in accordance with the present invention;

Figure 12 is a diagrammatic perspective view showing the transmission properties of a device in accordance with the present invention;

Figure 13 is a perspective view of a further embodiment of the present invention; and

Figure 14 is a perspective view of an alternative embodiment of a switch incorporing a device in accordance with the present invention.

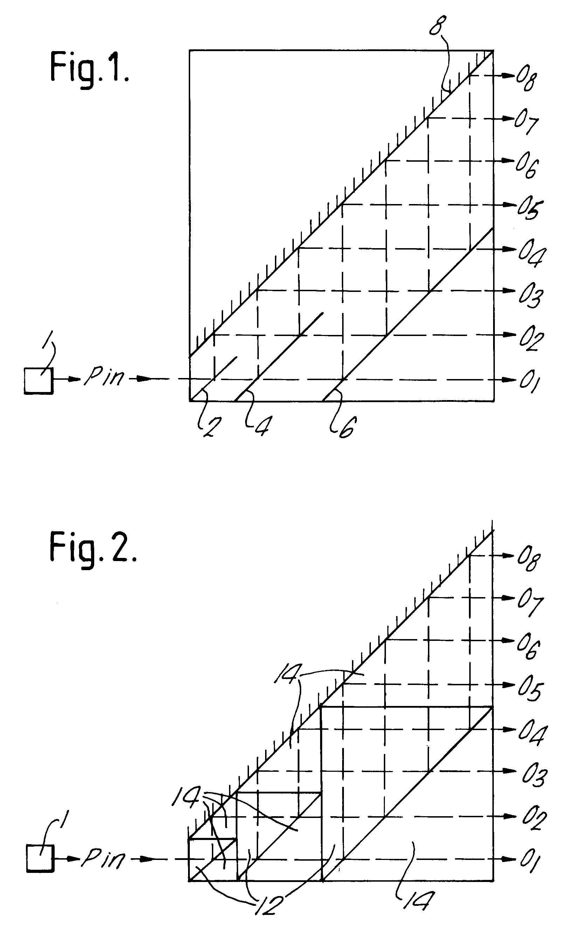

Referring to Figure 1 a device for distributing an optical signal among eight outputs comprises an optical input 1 and three splitter stages 2, 4, 6. Each splitter stage includes a transflective surface lying at 45° to the direction of incidence of light from the input 1. A mirror 8 extends across the device parallel to the transflective surfaces of the splitter stages 2, 4, 6. The transflective surface of the second splitter stage 4 is twice the length of the surface of the first splitter stage 2 and the surface of the final splitter stage 6 is in turn twice the length of the surface of the second splitter stage 4.

In use, a single beam is input at the optical input 1 which follows the optical paths shown by the dotted lines to the outputs 01 to 08. The beam strikes the first beam splitter 2 and is divided into two beams of equal power by a portion of the 50:50 transflective surface of the beam splitter (constituting a transflective means). One of the two resultant beams is transmitted through the beam splitter 2 and passes directly to the second beam splitter 4. The other beam is reflected from the transflective surface at 90° to the one beam and is reflected through a further 90° at the mirror sides so that after reflection the other beam propagates parallel to the one beam but separated from it in space. If losses at the mirror are neglected then since each beam has undergone a single transition at a 50:50 transflective surface each of the two beams reaching the second splitter stage 4 has half of the power of the original input beam. The beams are similarly subdivided at the subsequent splitter stages 4, 6 giving a total of eight beams at the optical outputs 01-08. Each of the paths from the input 1 to the outputs 01-08 involves three transitions at 50:50 transflective surfaces. The power of the input beam is therefore equally divided with one eighth going to each of the outputs 01-08.

The transflective means of each stage form a single transflective element corresponding to that stage.

The device may conveniently be constructed as a "sandwich" of optical glass substrates. Transflective coatings are applied to the substrates using masks to give the required coating geometry. The coating used is chosen to have transmission and reflection coefficients which are equal for light of different polarisation states incident at 45° and for a wide range of wavelengths. The device is therefore polarisation and wavelength insensitive. The substrates are then aligned by the outer edges and bonded with optical epoxy resin. A mirror coating is then applied or a separate mirror attached. Finally the "sandwich" is cut and polished to give optical quality end faces.

An alternative construction shown in Figure 2 uses an ensemble of beam splitter cubes 12 of graded sizes packed with 45° prisms 14. This construction requires more sub-assemblies but is physically suited to the fabrication of simple tree-networks with only one input. In place of beam splitter cubes polarising beam splitters followed by quarter wave plates may be used if the input and output states of polarisation of the light are known to be fixed.

In constructing the device the transflective coatings may be made colour selective to give a wavelength responsive routing function. In this case one or more of the beam splitting surfaces is arranged to function as a dichroic mirror. At a given wavelength substantially all of the light incident on the dichroic mirror is reflected whilst light of a significantly differing wavelength is transmitted. With a distributor including such wavelength selective surfaces a signal may be wavelength encoded to determine at which output or outputs it leaves the device.

The beam splitters may be made active to allow the interconnect pattern to be rearranged dynamically. The splitters may, for example, comprise polarising beam splitters and associated electro-optic polarisers such as liquid crystal cells arranged to function as half-wave plates. The input to the distributor is then linearly polarised in a given direction and the optical axes of the polarisers and beam splitters arranged at such an angle to the direction of polarisation of the light that an incident beam is transmitted or reflected according to the state of the electro-optic polariser. Alternatively, active 1/4-wave plates maybe used to produce circularly polarised components from the incident plane polarised beam.

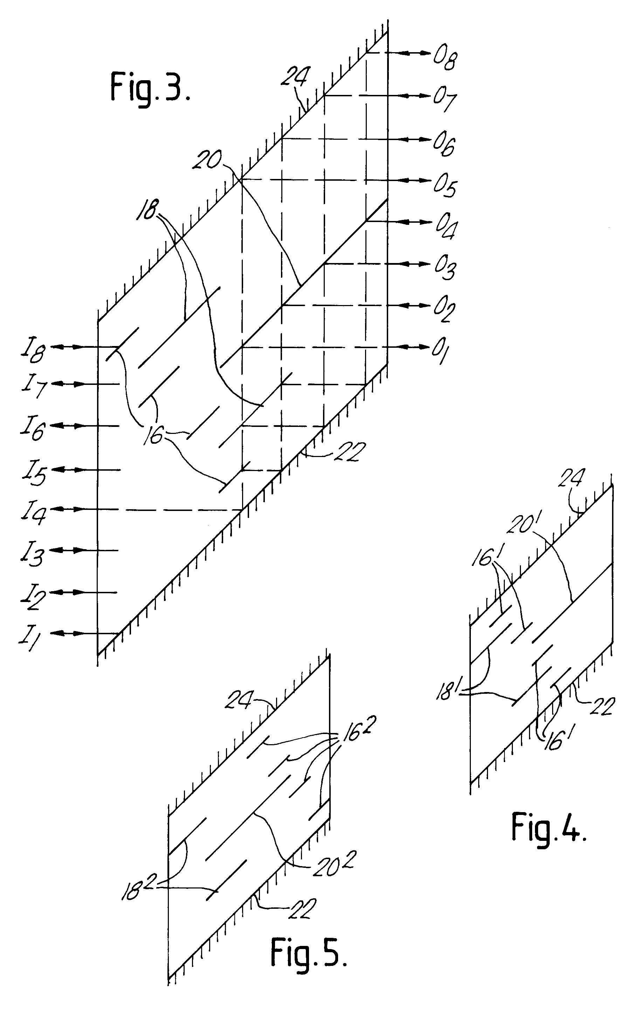

Referring now to Figure 3, a device according to the present invention configured as a star network is arranged to connect eight optical inputs I1 to I8 with eight optical outputs 01 to 08. As before there are, by way of example only, three splitter stages. However in this example first splitter stage includes four separate beam splitters 16, the second splitter stage two beam splitters 18 and the final splitter stage a single beam splitter 20. In general for a star network with $2^n$ outputs and $2^n$ inputs then if the ensemble of splitter stages are considered in order of increasing splitter lengths the kth splitter stage has with this specific arrangement $2^{n-k}$ separate beam splitters. It should be noted that the splitter stages do not need to be physically ordered in order of splitter length but may, for example, be arranged in configurations such as those of Figures 4 and 5.

In use each input of the star-network effectively sees a tree network which functions in the same manner as that described above according to the first aspect of the invention. For clarity paths from just one of the inputs is shown in Figure 3. A light beam from input I4 strikes a lower mirror 22 at 45° and is reflected upwards to the uppermost of the beam splitters of the first stage 16. Here it is split in two by the 50:50 transflective surface, the reflected beam passing directly to the upper beam splitter of the second stage 18 and the transmitted beam being reflected at an upper mirror 24 before travelling parallel to the reflected beam to the same upper beam splitter of the second splitter stage 18. A beam can be traced in similar fashion each of the other input and can be seen to be split in a manner precisely analogous to that described above for the tree-network. As with the tree network each path between the inputs 1I-I8 and the outputs 01-08 undergoes the same number of transitions at 1:1 transflective means and so the power from any one of the inputs I1-I8 is divided equally between the eight outputs 01-08. The star-network is bi-directional: light may be input from either end.

The tree networks for different inputs I1 to I8 have transreflective portions in common because the two parallel mirror 22 and 24 provide that optical paths from different inputs approach them from two orthogonal directions.

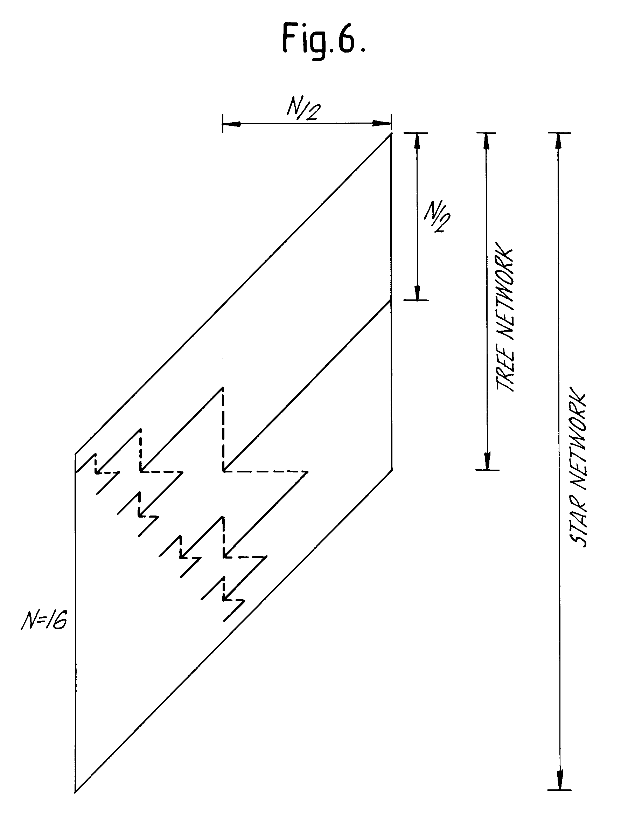

By increasing the number of beam splitter stages a device in accordance with the present invention can be made for distributing power from one or many inputs independently between a selected number of $2^n$ outputs. Growth rules for both tree and multiple input star networks of the arrangements shown in Figures 1, 2 and 3 are shown in Figure 6.

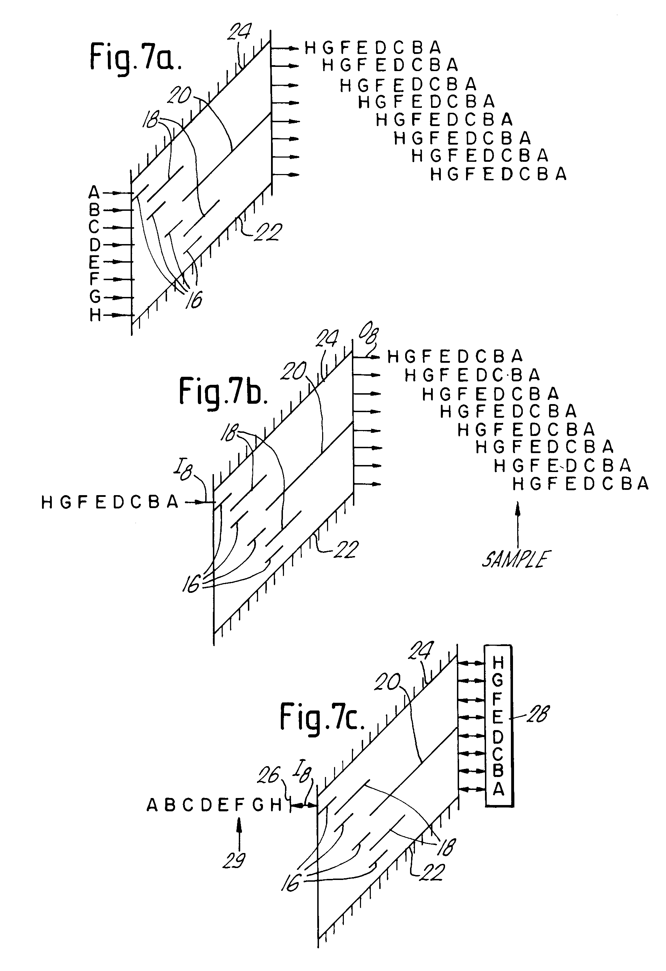

The propagation delay through the star network of Figure 3 is a linear function of input position with light from input I8 following the shortest path and hence emerging first and light from input I1 following the longest path and hence emerging last. This property may be exploited to give spatially-parallel to time-serial or time-serial to spatially-parallel multiplexing operations. Consider the 8x8 star couplers shown in Figures 7a to 7c. In 7a a simultaneous but spatially split input to the device is output as a signal which is spatially identical, i.e. the same from each of the spatially separated ports, but time-serial, i.e. the output from the lowermost port precedes that from the port immediately above it and so on, signal A being the first to exit from each. As shown in Figure 7b the device may be used to carry out the inverse operation in an analogous manner by inputting at input I8 a time serial signal (in which A enters the distributor first) and simultaneously sampling the outputs as signal A exits output O8.

Either of the end faces of the device may be coated with a mirror surface to give a distributor with the properties of a reflective-star-network but with $2^n$ multiple paths. However since each multiple path has a propagation delay that is a linear function of position, this feature enables the use of the device as a single-ended spatially-parallel to time-serial multiplexer as shown in Figure 7c. A plane wave pulse 26 is fed into the input port $I_8$ which is distributed to the eight output ports. The output pulses impinge on a spatial modulator 28 in serially, which therefore feeds back into the distributor time-serial inputs A to H which then pass back to the input $I_8$ to exit as a time-serial signal 29.

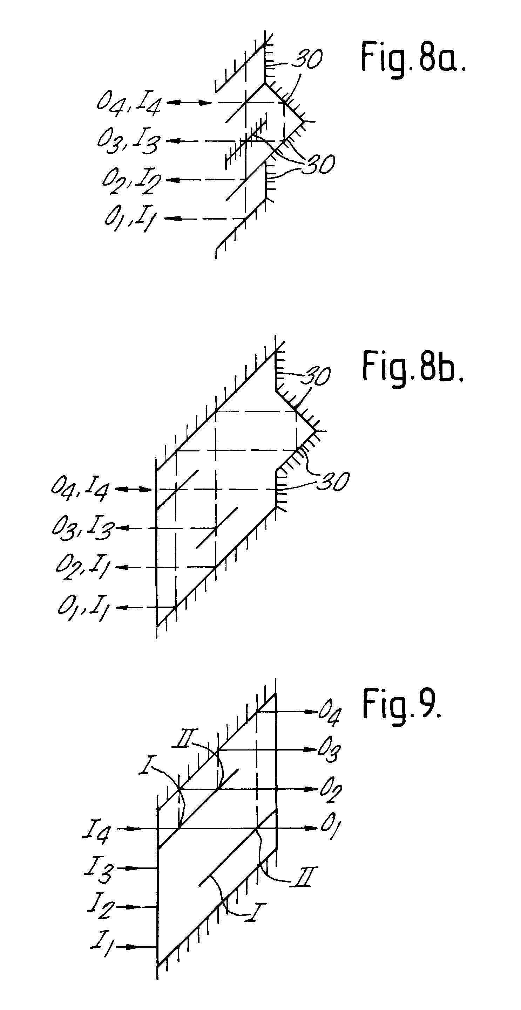

Referring now to Figures 8a and 8b there are shown reflective 4x4 star couplers and an illustrative beam path for an input at $I_4$ which have transflective elements 28, mirrors 20 and 22 corresponding to those of Figure 2 and additional mirrors 30 which introduce additional redundancy in that the 4x4 coupler requires only two transflective means each on one transflective element.

In the embodiments described with reference to Figures 1 to 5 the transflective means were formed by common transflective elements which were from the same beam splitter stage. This need not be the case: in some configurations transflection means from different stages can be combined, according to the present invention, on one transflective surface to obtain a component reduction. This is shown in the 4x4 star coupler of Figure 9 in which stage one and stage two means (I and II respectively) are combined on one element. This enables a 4x4 coupler to be constructed from only two transflective elements.

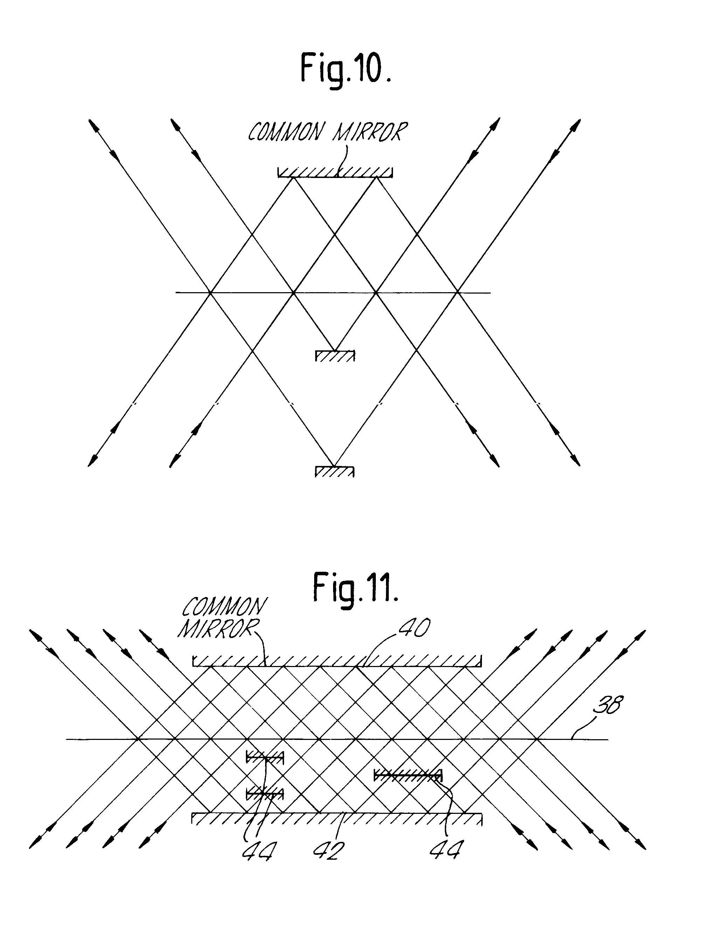

In alternative embodiments of the present invention shown in Figures 10 and 11, a single transflective surface forms the transflective means for all the splitters stages. Figure 10 is a 4x4 star coupler utilising this configuration. Another such configuration is shown in Figure 11 is an 8x8 star coupler having a transflective element 38, two common mirrors 40, 42 and three double sided mirrors 44. In general for an NxN network where N equals $2^n$, $(N/2 + 1)$ mirrors are required including two mirrors common to all stages. There are $(log_2 N)-1$ stages, the first stage having $(N/4 + 2)$ mirrors, including the mirror common to all stages. The second stage has $(N/8 + 2)$ mirrors and so on, the jth stage having $(N/2^{(j+1)} + 2)$ mirrors. The internal mirrors, which are double sided, are arranged about a point spaced mid-way between the transflective surface and one of the common mirrors. The common mirrors are placed on opposite sides of the transflective surface and spaced from it by a distance proportional to N/4. The common mirrors can if desired be extend laterally from the positions shown in Figures 10 and 11 to intersect the upper input and output beams so all the inputs and outputs are on the same side of the device.

By increasing the number of beam splitters in the splitter stages a device in accordance with the present invention can be made for distributing power from one or many inputs independently between many outputs. Growth rules for both tree and multiple input star-networks of the form shown in Figure 1, 2 and 3 are shown in Figure 6.

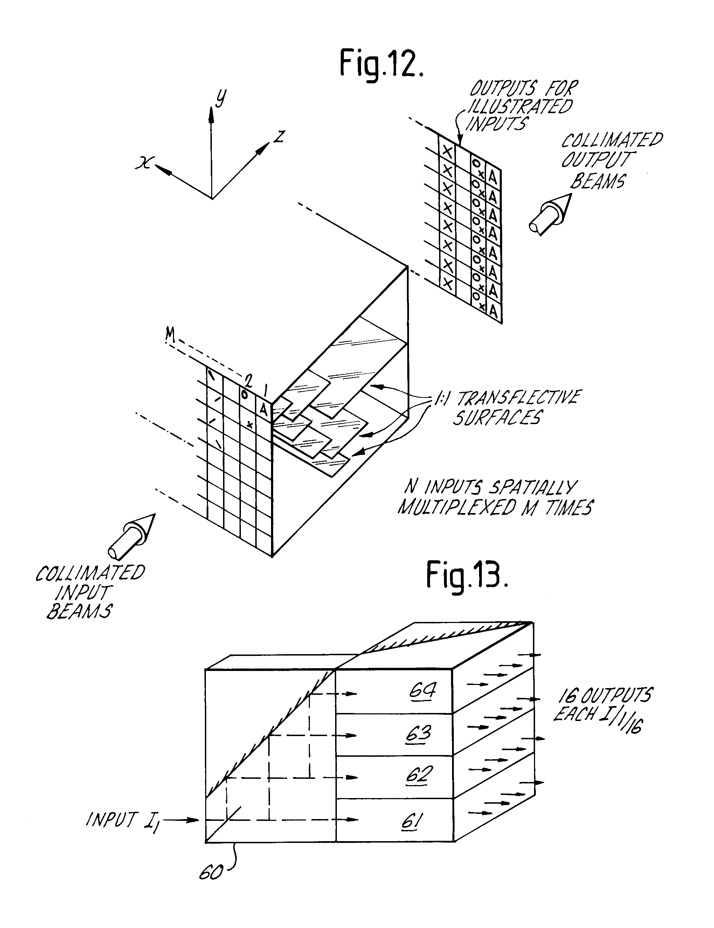

By extending the transflective surfaces of the above embodiments in the direction orthogonal to the plane of the inputs I1-I8 and outputs O1-O8 the device may be depth-multiplexed with further independent sets of inputs and outputs at intervals along the X-direction as shown in Figure 12, each independent set of inputs and outputs lying parallel to the Y-Z plane. Such a depth-multiplexed device may be used in combination with a un-multiplexed network of the type described above in order to distribute a single input or inputs over a two-dimensional array. Such an arrangement is as shown schematically for a simple 4-output tree-network in Figure 13. A depth-multiplexed set of four tree-networks 61-64 is placed at the output of a single tree-network 60. The depth-multiplexed networks are rotated through 90° with respect to the input tree-network and arranged so that each output of the input tree-network 60 goes to the input of a respective one of the networks 61-64 of the depth-multiplexed set. Similarly a depth-multiplexed set of star networks may be arranged to receive the output of a single star network. Alternatively star networks may be combined with tree networks in a similar fashion according to the distribution characteristics required.

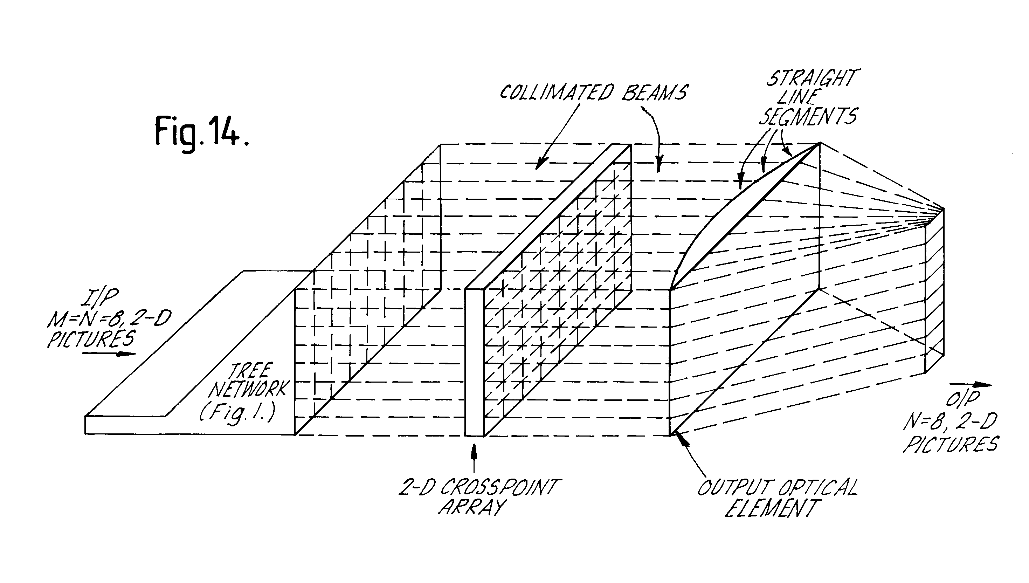

Devices in accordance with the present invention may advantageously be used in the construction of broadband digital electro-optic space switches that are described in our co-pending UK application no. 8701996. The low-loss and high optical quality of a device in accordance with the present invention allows switch dimensions as high as 300 x 300 to be achieved. A further advantage of the use of these devices in this context is that the switch throughput can be increased with no loss penalty by using the two spatial dimensions of the signal paths. For example, the signal may consist of a 32-bit data bus or even a complete page of data transmitted in parallel. An architecture for a two-dimensional image switching system is shown in Figure 14. For simple 1-D serial transmission the output optical elements may be replaced by a simple clyindrical lens. Since inter-crosspoint signals are collimated optical beams, the entire switch traffic can be routed in many ways. It is, for example, possible to switch between M cross point arrays in order to provide a fail-proof backup.

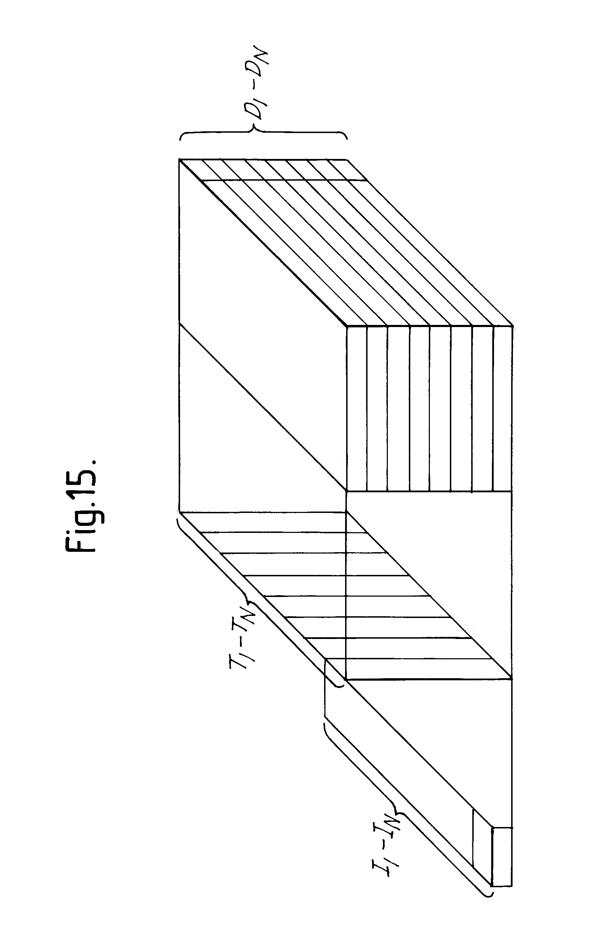

An alternative embodiment of a switch including a distributor in accordance with the present invention, is shown in Figure 15. The outputs of a depth multiplexed set of N tree networks TI to TN are input to N digitally indexed light deflectors DI to DN spacially multiplexed in the direction at right angles to the depth multiplexed tree-networks. The light deflectors comprise birefingent crystals interspersed with electro-optic polarisers: such deflectors are disclosed in the paper by Kulcke et al on pages 64 - 67 of the IBM Journal, January 1964. In the optical switch of figure 14 the deflectors are used in an N input to 1 output configuration so that the switch as a whole has N outputs extending in a direction at right angles to the N inputs. Such a switch has an inherent loss of $10 \log_{10} N$ dB.

## Claims

1. An optical distributor comprising:
   (a) at least one optical input (1),
   (b) $2^n$ optical outputs ($O_1$ to $O_8$), where n is an integer greater than 1, and
   (c) transflective means (2, 4, 6) which are arranged to provide one optical path between the input and each of the outputs wherein each of the paths makes n transitions only at the transflective means;
   characterised in that the distributor also includes at least one plain mirror surface (8) which co-operates with said transflective means to provide said paths and that at least two of the transflective means are portions of a single transflective surface.

2. A distributor as claimed in claim 1 having n beam splitter stages (2, 4, 6) each of which includes a single separate transflective surface and a first plane mirror surface arranged such that the or each beam incident on each beam splitter stage is split to a reflected beam and a transmitted beam, one of the beams passing directly to any subsequent beam splitter stage, the other of the two beams being reflected at the first plane mirror surface before passing to any subsequent beam splitter stage.

3. A distributor according to claim 2, in which the transflective surfaces are arranged to lie at substantially 45° to the incident beams and the first plane mirror surface is parallel to the transflective surfaces.

4. A distributor according to claims 2 or 3, in which the splitter stages are arranged in order of beam splitter effective length, with the shortest stage closest to the optical input.

5. An optical distributor comprising:
   (a) $2^n$ optical input ($I_1$ to $I_8$), and $2^n$ optical outputs ($O_1$ to $O_8$), where n is an integer greater than 1,
   (b) transflective means (16, 18, 20) which are arranged to provide one optical path between each input and each output wherein each of the paths makes n transitions only at the transflective means;
   characterised in that the distributor also includes at least one plane mirror surface (22, 24) which co-operates with said transflective means to provide said path, that at least two of the transflective means are portions of a single transflective surface, and that each transflective means is in optical path originating from at least two of the inputs.

6. A distributor according to claim 5 including $2^n$ optical inputs, $2^n$ optical outputs and k beam splitter stages, each kth beam splitter stage having $2^{(n-k)}$ spatially separate transflective surfaces arranged between the first plane mirror surface and a second opposing plane mirror surface parallel to the first plane mirror surface.

7. A distributor according to any one of the preceding claims, which is incorporated in an optical space switch.

**Patentansprüche**

1. Optischer Verteiler, umfassend:

    (a) mindestens einen optischen Eingang (1),

    (b) $2^n$ optische Ausgänge (O1-O8), wobei n eine gange Zahl größer als 1 ist, und

    (c) transflektierende Mittel (2, 4, 6), die so angeordnet sind, daß sie einen optischen Pfad zwischen dem Eingang und jedem der Ausgänge schaffen, wobei jeder der Pfade n Durchgänge nur an den transflektierenden Mitteln macht;

    **dadurch gekennzeichnet,** daß

    der Verteiler weiter mindestens eine ebene Spiegeloberfläche (8) umfaßt, die mit dem transflektierenden Mittel zur Schaffung der Pfade zusammenwirkt, und daß mindestens zwei der transflektierenden Mittel Abschnitte einer einzelnen transflektierenden Oberfläche sind.

2. Verteiler nach Anspruch 1, mit n Strahlteilerstufen (2, 4, 6), von denen jede eine einzelne, getrennte transflektierende Oberfläche und eine erste ebene Spiegeloberfläche umfaßt, die so angeordnet sind, daß der bzw. jeder auf jede Strahlteilerstufe einfallende Strahl in einen reflektierten Strahl und einen durchgelassenen Strahl geteilt wird, wobei einer der Strahlen direkt zu einer beliebigen, nachfolgenden Strahlteilerstufe weiterläuft, während der andere der beiden Strahlen an der ersten ebenen Spiegeloberfläche reflektiert wird, ehe er zu einer beliebigene nachfolgenden Strahteilerstufe weiterläuft.

3. Verteiler nach Anspruch 2, bei dem die transflektierenden Oberflächen so angeordnet sind, daß sie im wesentlichen unter einem Winkel von 45° zu den einfallenden Strahlen liegen und die erste ebene Spiegeloberfläche parallel zu den transflektierenden Oberflächen verläuft.

4. Verteiler nach den Ansprüchen 2 oder 3, bei dem die Teilerstufen, nach effektiven Strahlteilerlängen angeordnet sind, wobei die kürzeste Stufe dem optischen Eingang am nächsten liegt.

5. Optischer Verteiler, umfassend:

    (a) $2^n$ optische Eingänge (I1-I8) und $2^n$ optische Ausgänge (O1-O8), wobei n eine ganze Zahl größer als 1 ist,

    (b) transflektierende Mittel (2, 4, 6), die so angeordnet sind, daß sie einen optischen Pfad zwischen dem Eingang und jedem der Ausgänge schaffen, wobei jeder der Pfade n Durchgänge nur an den transflektierenden Mitteln macht;

    dadurch gekennzeichnet, daß der Verteiler weiter mindestens eine ebene Spiegeloberfläche (22, 24) umfaßt, die mit den transflektierenden Mitteln zur Schaffung der Pfade zusammenwirkt; daß mindestens zwei der transflektierenden Mittel Abschnitte einer einzelnen transflektierenden Oberfläche sind; und daß jedes transflektierende Mittel sich in einem Pfad befindet, der von mindestens zweien der Eingänge ausgeht.

6. Verteiler nach Anspruch 5, der $2^n$ optische Eingänge, $2^n$ optische Ausgänge und k Strahlteilerstufen aufweist, wobei die k-te Strahlteilerstufe $2^{(n-k)}$ räumlich getrennte, transflektierende Oberflächen aufweist, die zwischen der ersten ebenen Spiegeloberfläche und einer zweiten gegenüberstehenden, parallel zur ersten verlaufenden, ebenen Spiegeloberfläche angeordnet sind.

7. Verteiler nach einem beliebigen vorhergehenden Anspruch, der in einen optischen Raumschalter einbezogen ist.

## Revendications

1. Un répartiteur optique comprenant :

    (a) au moins une entrée optique (1)

    (b) $2^n$ sorties optiques ($O_1$ à $O_8$) où n est un entier supérieur à 1, et

    (c) des moyens de transmission/réflexion (2, 4, 6) qui sont agencés de manière à former un trajet optique entre l'entrée et chacune des sorties, dans lesquels chacun des trajets effectue n transitions seulement sur les moyens de transmission/réflexion;

    caractérisé en ce que le répartiteur inclut aussi au moins une surface de miroir simple (8) qui coopère avec lesdits moyens de transmission/réflexion pour former lesdits trajets et en ce qu'au moins deux desdits moyens de transmission/réflexion sont des parties d'une surface unique de transmission/réflexion.

2. Un répartiteur selon la revendication 1 comprenant n étages (2, 4, 6) de lames séparatrices dont chacun inclut une surface unique séparée de transmission/réflexion et une première surface de miroir plan disposée de manière telle que le faisceau incident, ou chacun d'eux, sur chaque étage de lames séparatrices est divisé en un faisceau réfléchi et un faisceau transmis, l'un des faisceaux passant directement vers un étage ultérieur quelconque de lames séparatrices, l'autre des deux faisceaux étant réfléchi sur la première surface de miroir plan avant de passer vers un étage ultérieur quelconque de lames séparatrices.

3. Un répartiteur selon la revendication 2, dans lequel les surfaces de transmission/réflexion sont agencées de manière à être situées selon un angle sensiblement égal à 45° par rapport aux faisceaux incidents et la première surface de miroir plan est parallèle aux surfaces de transmission/réflexion.

4. Un répartiteur selon l'une des revendications 2 ou 3, dans lequel les étages de lames séparatrices sont disposés dans l'ordre des longueurs effectives de lames séparatrices, l'étage le plus court étant le plus voisin de l'entrée optique.

5. Un répartiteur optique comprenant :
   (a) $2^n$ entrées optiques ($I_1$ à $I_8$) et $2^n$ sorties optiques ($O_1$ à $O^8$) où n est un entier supérieur à 1,
   (b) des moyens (16, 18, 20) de transmission/réflexion qui sont agencés de manière à former un trajet optique entre chaque entrée et chaque sortie dans lequel chacun des trajets effectue n transitions seulement sur les moyens de transmission/réflexion;
   caractérisé en ce que le répartiteur inclut aussi au moins une surface de miroir plan (22, 24) qui coopère avec lesdits moyens de transmission/réflexion pour former ledit trajet, en ce qu'au moins deux des moyens de transmission/réflexion sont des parties d'une surface unique de transmission/réflexion, et en ce que chaque moyen de transmission/réflexion est dans un trajet optique provenant d'au moins l'une des entrées.

6. Un répartiteur selon la revendication 5 incluant $2^n$ entrées optiques, $2^n$ sorties optiques et k étages de lames séparatrices, chaque k-ième étage de lames séparatrices comprenant $2^{(n-k)}$ surfaces séparées spatialement de transmission/réflexion agencées entre la première surface de miroir plan et une deuxième surface opposée de miroir plan parallèle à la première surface de miroir plan.

7. Un répartiteur selon l'une quelconque des revendications précédentes, qui est incorporé dans un commutateur spatial optique.

# Fig.1.

# Fig.2.

Fig. 3.

$I_8$  $I_7$  $I_6$  $I_5$  $I_4$  $I_3$  $I_2$  $I_1$

$O_8$  $O_7$  $O_6$  $O_5$  $O_4$  $O_3$  $O_2$  $O_1$

24  20  18  16  22

Fig. 4.

24  20¹  16¹  18¹  22  16¹

Fig. 5.

24  16²  18²  20²  22

# Fig.6.

Fig.7a.

Fig.7b.

SAMPLE

Fig.7c.

Fig.8a.

$O_4, I_4$
$O_3, I_3$
$O_2, I_2$
$O_1, I_1$

30

30

Fig.8b.

$O_4, I_4$
$O_3, I_3$
$O_2, I_1$
$O_1, I_1$

30

30

Fig.9.

$I_4$
$I_3$
$I_2$
$I_1$

$O_4$
$O_3$
$O_2$
$O_1$

II
I
II
I

# Fig.10.

COMMON MIRROR

# Fig.11.

COMMON
MIRROR

40

38

44    42    44

Fig.12.

OUTPUTS FOR ILLUSTRATED INPUTS

COLLIMATED OUTPUT BEAMS

1:1 TRANSFLECTIVE SURFACES

N INPUTS SPATIALLY MULTIPLEXED M TIMES

COLLIMATED INPUT BEAMS

Fig.13.

64

63

62

61

INPUT $I_1$

60

16 OUTPUTS EACH $I/1/16$

Fig.14.

COLLIMATED BEAMS

STRAIGHT LINE SEGMENTS

I/P M=N=8, 2-D PICTURES

TREE NETWORK (Fig.1.)

2-D CROSSPOINT ARRAY

OUTPUT OPTICAL ELEMENT

O/P N=8, 2-D PICTURES

EP 0 307 243 B1

Fig.15.